# EUROPEAN PATENT APPLICATION

(11) **EP 4 227 127 A1**
(43) Date of publication of application: **16.08.2023**
(21) Application number: 22305154.1
(22) Date of filing: 11.02.2022
(51) Int. Cl.: B60J 5/04

(54) **HYBRID DOOR FOR A VEHICLE**

(71) Applicant: TOYOTA JIDOSHA KABUSHIKI KAISHA, Toyota-shi, Aichi-ken, 471-8571 (JP)
(72) Inventor: KERSCHBAUM, Martin, 1140 BRUSSELS (BE); AUTHOM, Pierre, 1140 BRUSSELS (BE); TACHON, Julien, 1140 BRUSSELS (BE)
(74) Representative: Cabinet Beau de Loménie

(57) **Abstract**

A door (10) for a vehicle (100) including a component panel (20) extending between a first end (12) and a second end (14) of the door, one or more reinforcement beam (34, 36, 38) overlapping the component panel between the first end and the second end of the door, and an inner panel (40) coupled to the component panel (20), the inner panel including a body (44) overlapping the component panel between the first end and the second end of the door and one or more inner panel reinforced portion (46, 48) overlapping the component panel between the first end and the second end of the door, wherein, the component panel and the one or more reinforcement beam are comprised of one or more metal and the inner panel is comprised of one or more polymer.

## Description

### FIELD

The present disclosure relates to the field of vehicles. Particularly, the present disclosure relates to a door for a vehicle, which is configured to reduce an overall weight and cost of manufacture of the vehicle.

### BACKGROUND

A side door of a vehicle may typically include an outer panel, an inner panel, and a component panel including parts such as a window frame, a window regulator, and a door-locking mechanism extending between or from the outer panel and/or the inner panel. It is necessary for the outer panel, the inner panel, and the component panel to be manufactured from a strong, durable, and rigid material in order to reduce deformation and breakage of the side door of the vehicle, in order to protect an occupant within a passenger compartment of the vehicle when an impact is sustained by the vehicle. As such, the outer panel, the inner panel, and the component panel of a side door of a vehicle are typically manufactured from one or more metal, such as steel and/or aluminum.

However, manufacturing each of the outer panel, the inner panel, and the component panel of a side door of a vehicle from metal increases an overall weight and cost of manufacture of the vehicle and/or hinders an ability of a manufacturer to reduce the overall weight and/or cost of manufacture of the vehicle. Reducing an overall weight of a vehicle allows the vehicle to be safer and/or more efficient. For example, reducing the overall weight of a vehicle improves braking, stability, power, fuel consumption, and/or the like. Accordingly, manufacturing each of the outer panel, the inner panel, and the component panel of a side door of a vehicle from metal hinders an ability of a manufacturer to improve safety, efficiency, and cost of manufacture of a vehicle.

Currently available alternatives to manufacturing each of the outer panel, the inner panel, and the component panel of a side door of a vehicle from metal, such as manufacturing the outer panel, the inner panel, and/or the component panel of a side door of a vehicle from plastic, typically increase the cost of manufacture of the vehicle and/or reduce the safety of the vehicle. For example, manufacturing the outer panel, the inner panel, and/or the component panel of a side door of a vehicle from carbon fiber sheet molding compound (C-SMC) is expensive and less suitable for optimized fabrication processes, such as injection molding. Additionally, manufacturing each of the outer panel, the inner panel, and the component panel of a side door of a vehicle from plastic may result in reduced impact integrity.

It is desirable to provide a door for a vehicle which includes structures and/or relationships that are capable of reducing an overall weight and cost of manufacture the vehicle, without sacrificing the impact integrity of the door and, thus, the safety of the vehicle.

### SUMMARY

According to aspects of the disclosure, a door for a vehicle includes a component panel extending between a first end and a second end of the door, one or more reinforcement beam overlapping the component panel between the first end and the second end of the door, and an inner panel coupled to the component panel, the inner panel including a body overlapping the component panel between the first end and the second end of the door and one or more inner panel reinforced portion overlapping the component panel between the first end and the second end of the door, wherein the component panel and the one or more reinforcement beam are comprised of one or more metal and the inner panel is comprised of one or more polymer.

According to aspects of the disclosure, the body of the inner panel is formed through an injection molding fabrication process.

According to aspects of the disclosure, the body of the inner panel is comprised of a polypropylene thermoplastic reinforced with long glass fiber within a range of 20% to 60% by weight.

According to aspects of the disclosure, the one or more inner panel reinforced portion is comprised of a polypropylene thermoplastic unidirectional tape reinforced with glass fiber within a range of 50% to 90% by weight.

According to aspects of the disclosure, the door according to any aspect described herein includes an outer panel coupled to the component panel, and the outer panel is arranged at a distance from a passenger compartment of the vehicle that is further than a distance of the inner panel from the passenger compartment of the vehicle.

According to aspects of the disclosure, the outer panel is comprised of one or more metal.

According to aspects of the disclosure, the one or more reinforcement beam is connected to the component panel.

According to aspects of the disclosure, the one or more reinforcement beam includes a first reinforcement beam and a second reinforcement beam and the second reinforcement beam is positioned below the first reinforcement beam.

According to aspects of the disclosure, the first reinforcement beam is configured to reinforce a belt line of the vehicle.

According to aspects of the disclosure, the one or more reinforcement beam includes a third reinforcement beam and the third reinforcement beam is positioned below the first reinforcement beam and the second reinforcement beam.

According to aspects of the disclosure, the one or more inner panel reinforced portion of the inner panel includes a first inner panel reinforced portion configured to reinforce a belt line of the vehicle.

According to aspects of the disclosure, the one or more inner panel reinforced portion of the inner panel includes a second inner panel reinforced portion configured to reinforce a rocker panel of the vehicle.

According to aspects of the disclosure, the inner panel includes one or more reinforcement insert configured to reinforce a connection point between the door and the vehicle.

According to aspects of the disclosure, the component panel includes a window frame extending between the first end and the second end of the door and a window guide extending between the first end and the second end of the door.

According to aspects of the disclosure, one or more of the second reinforcement beam and the third reinforcement beam are connected to the window guide.

According to aspects of the disclosure, the inner panel includes strengthening ribs configured to reinforce a belt line of the vehicle.

According to aspects of the disclosure, the inner panel includes strengthening ribs configured to reinforce a rocker panel of the vehicle.

According to aspects of the disclosure, the strengthening ribs of the inner panel are formed through an injection molding process.

According to aspects of the disclosure, a method for reducing an overall weight of a vehicle is provided. The method includes providing the door according to any aspect described herein and assembling the door to the vehicle.

In the manner described and according to aspects illustrated herein, the door and the method are capable of reducing an overall weight and cost of manufacture a vehicle, without sacrificing the impact integrity of the door and, thus, the safety of the vehicle.

### BRIEF DESCRIPTION OF THE DRAWINGS

Aspects of an embodiment will be described in reference to the drawings, where like numerals reflect like elements:
Figure 1 is a side perspective view of a door provided on a vehicle according to aspects of the disclosure;
Figure 2 is a side perspective view of the door according to Figure 1;
Figure 3 is a side perspective view of a component panel and an inner panel of the door of Figure 1;
Figure 4 is a side perspective view of the component panel of Figure 3;
Figure 5 is a side perspective view of the inner panel of Figure 3;
Figure 6 is an enlarged partial side perspective view of the component panel and the inner panel of Figure 3;
Figure 7 is a side perspective view of an outer panel of the door according to Figure 1;
Figure 8 is a graphical representation of a weight of aspects of the door of Figure 1 and a weight of a typical steel door; and
Figure 9 is a graphical representation of a Pole W-Intrusion test of the door of Figure 1.

### DETAILED DESCRIPTION

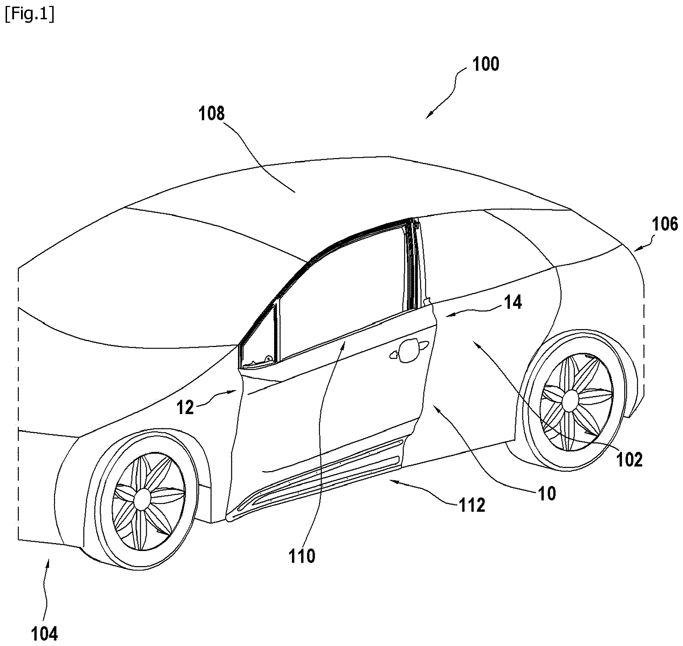

An embodiment of a door (also may be referred to as a "hybrid door") configured for use on a vehicle according to aspects of the disclosure will now be described with reference to Figures 1-9. Like numerals represent like parts, and the door will generally be referred to by the reference numeral 10. Although the door 10 is described with reference to specific examples, it should be understood that modifications and changes may be made to these examples without going beyond the general scope as defined by the claims. In particular, individual characteristics of the various embodiments shown and/or mentioned herein may be combined in additional embodiments. Consequently, the description and the drawings should be considered in a sense that is illustrative rather than restrictive. The Figures, which are not necessarily to scale, depict illustrative aspects and are not intended to limit the scope of the disclosure. The illustrative aspects depicted are intended only as exemplary.

The term "exemplary" is used in the sense of "example," rather than "ideal." While aspects of the disclosure are amenable to various modifications and alternative forms, specifics thereof have been shown by way of example in the drawings and will be described in detail. It should be understood, however, that the intention is not to limit aspects of the disclosure to the particular embodiment(s) described. On the contrary, the intention of this disclosure is to cover all modifications, equivalents, and alternatives falling within the scope of the disclosure.

Various materials, methods of construction and methods of fastening will be discussed in the context of the disclosed embodiment(s). Those skilled in the art will recognize known substitutes for the materials, construction methods, and fastening methods, all of which are contemplated as compatible with the disclosed embodiment(s) and are intended to be encompassed by the appended claims.

As used in this disclosure and the appended claims, the singular forms "a," "an," and "the" include plural referents unless the content clearly dictates otherwise. As used in this disclosure and the appended claims, the term "or" is generally employed in its sense including "and/or" unless the content clearly dictates otherwise.

Throughout the description, including the claims, the terms "comprising a," "including a," and "having a" should be understood as being synonymous with "comprising one or more," "including one or more," and "having one or more" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially," "approximately," and "generally" should be understood to mean falling within such accepted tolerances.

When an element or feature is referred to herein as being "on," "engaged to," "connected to," or "coupled to" another element or feature, it may be directly on, engaged, connected, or coupled to the other element or feature, or intervening elements or features may be present. In contrast, when an element or feature is referred to as being "directly on," "directly engaged to," "directly connected to," or "directly coupled to" another element or feature, there may be no intervening elements or features present. Other words used to describe the relationship between elements or features should be interpreted in a like fashion (e.g., "between" versus "directly between," "adjacent" versus "directly adjacent," etc.).

Spatially relative terms, such as "top," "bottom," "middle," "inner," "outer," "beneath," "below," "lower," "above," "upper," and the like, may be used herein for ease of description to describe one element or feature's relationship to another element(s) or feature(s) as illustrated in the drawings. Spatially relative terms may be intended to encompass different orientations of a device in use or operation in addition to the orientation depicted in the drawings. For example, if the device in the drawings is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

Although the terms "first," "second," etc. may be used herein to describe various elements, components, regions, layers, sections, and/or parameters, these elements, components, regions, layers, sections, and/or parameters should not be limited by these terms. These terms are only used to distinguish one element, component, region, layer, or section from another region, layer, or section. Thus, a first element, component, region, layer, or section discussed herein could be termed a second element, component, region, layer, or section without departing from the teachings of the present disclosure.

As shown in Figures 1-3, the door 10 is configured for use on a vehicle 100. As such, it is contemplated that the door 10 may be understood as being part of the vehicle 100. In the disclosed embodiment, the vehicle 100 is a passenger vehicle having a passenger compartment (not shown) including one or more seat (not shown) configured to seat one or more occupant within the vehicle 100. In particular, the door 10 is configured for use on a side 102 of the vehicle 100. More specifically, the door 10 is configured for use on the side 102 of the vehicle 100 facing a position in which the occupant may be seated within the passenger compartment of the vehicle 100. As such, the door 10 may be referred to as a "side door" and/or a "passenger door" of the vehicle 100. It is contemplated that the term "side" may be further understood as a portion of the vehicle 100 extending between a front 104 of the vehicle 100 and a rear 106 of the vehicle 100, and between a roof 108 of the vehicle 100 and a surface (not shown) beneath the vehicle 100. Additionally, it is contemplated that the terms "front" and "rear" may be understood in relation to a direction of travel of the vehicle 100, such that when the vehicle 100 is moving in a forward direction the front 104 of the vehicle 100 is a leading portion of the vehicle 100 and the rear 106 of the vehicle 100 is a trailing portion of the vehicle 100.

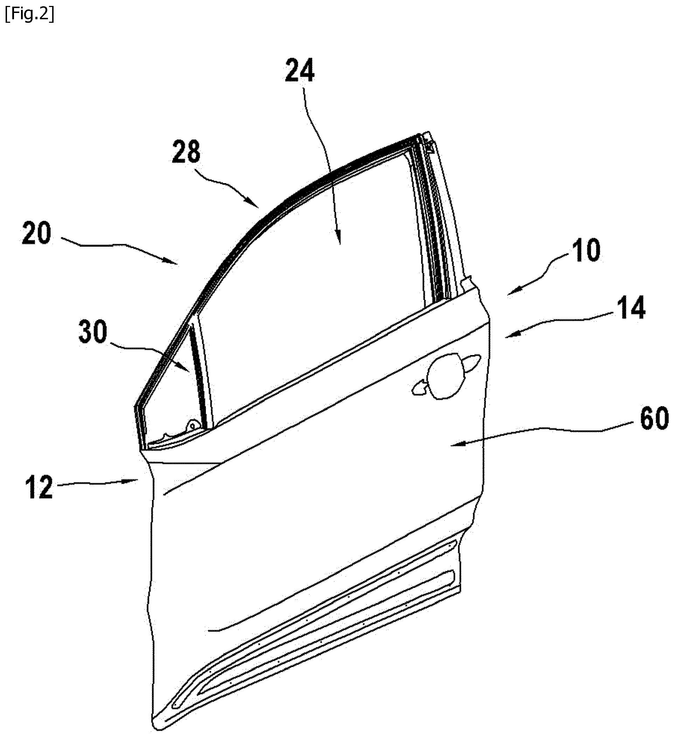

As shown in Figures 2-6, the door 10 includes a component panel (also may be referred to herein as a "door frame") 20, an inner panel 40, and an outer panel 60, manufactured from one or more metal and one or more polymer, so as to be configured to reduce an overall weight and cost of manufacture of the vehicle 100. It is contemplated that the terms "outer" and "inner" as used herein may be understood with reference to the passenger compartment of the vehicle 100, such that the inner panel 40 is closer in proximity to the passenger compartment of the vehicle 100 than the outer panel 60 and the outer panel 60 is further in proximity from the passenger compartment of the vehicle 100 than the inner panel 40. In the disclosed embodiment, at least a portion of the component panel 20 is arranged between the inner panel 40 and the outer panel 60 of the door 10. Additionally, the component panel 20, the inner panel 40, and the outer panel 60 are arranged substantially parallel to each other.

Referring to Figures 2-3, the door 10 extends between a first end 12 and a second end 14. Accordingly, the first end 12 and the second end 14 of the door 10 may correspond to a first end 12 and a second end 14 of each of the component panel 20, the inner panel 40, and the outer panel 60 of the door 10. In the disclosed embodiment, the first end 12 of the door 10 may be understood as an end of the door 10 that is closer in proximity to the front 104 of the vehicle 100 than the second end 14 of the door 10 and the second end 14 of the door 10 may be understood as an end of the door 10 that is closer in proximity to the rear 104 of the vehicle 100 than the first end 12 of the door 10.

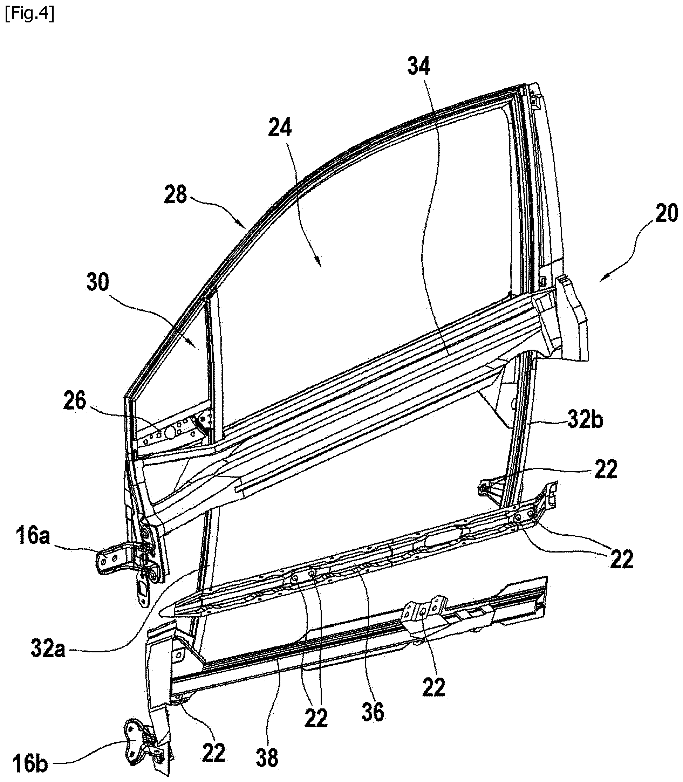

As shown in Figures 2-4, the component panel 20 is oriented between the inner panel 40 and the outer panel 60 of the door 10. Additionally, the component panel 20 is coupled to the inner panel 40 and the outer panel 60 of the door 10. Particularly, the component panel 20 is coupled to the inner panel 40 and the outer panel 60 in a sandwiched arrangement. To this end, referring Figure 4, the component panel 20 may include one or more opening (first opening) 22 configured to receive a fastener (not shown) to secure the inner panel 40 and/or the outer panel 60 to the component panel 20. Particularly, the component panel 20 may include a plurality of the openings 22 configured to receive a plurality of fasteners to secure the inner panel 40 and/or the outer panel 60 to the component panel 20; however, the plurality of the openings 22 of the component panel 20 will be referred to herein as "the opening 22," unless reference to the plurality of openings 22 of the component panel 20 is otherwise necessary. In the disclosed embodiment, the fastener is a threaded fastener, such as a bolt; however, it is contemplated that other fasteners may be compatible for securing the inner panel 40 and/or the outer panel 60 to the component panel 20. Additionally or alternatively, the component panel 20 may be adhesive bonded to the inner panel 40 and/or the outer panel 60. Particularly, the component panel 20 may be adhesive bonded to the outer panel 60, along a peripheral portion of the outer panel 60. Further, the outer panel 60 may be adhesive bonded to a second reinforcement beam 36 of the component panel 20 (discussed further below). Adhesive bonding the inner panel 40 and/or the outer panel 60 to the component panel 20 further allows the overall weight of the door 10 to be reduced and strengthens the coupling between the component panel 20 and the inner panel 40 and/or the outer panel 60. Additionally or alternatively, a plurality of clips (not shown) may secure the outer panel 60 to the component panel 20, along the peripheral portion of the outer panel 60. Additionally or alternatively, the outer panel 60 may be welded to the component panel 20. Once the inner panel 40 and the outer panel 60 are coupled to the component panel 20, the door 10 may be assembled onto the vehicle 100.

As shown in Figures 1-2 and 4, the component panel 20 includes operational components of the door 10. As such, the component panel 20 may include a window 24, a side-view mirror support 26, and a door-locking mechanism (not shown). To this end, the component panel 20 includes a window frame (also may be referred to herein as a "window sash") 28, a window guide 30, and a window regulator (not shown) included between the first end 12 and the second end 14 of the door 10. Additionally, the component panel 20 is configured to support a window glass (not shown) between the inner panel 40 and the outer panel 60 of the door 10. Particularly, the window frame 28 and the window guide 30 are each configured to support the window glass. The window guide 30 is configured to support opposite ends of the window glass. To this end, the window guide 30 includes a first rail 32a and a second rail 32b configured to support the window glass. Additionally, the first rail 32a and the second rail 32b extend parallel to each other. The window guide 30 is configured to allow for movement of the window glass between a closed state and an open state upon activation of the window regulator by a user of the door 10. It is contemplated that the term "closed state" as used herein may be understood as a state in which the window glass extends throughout the window frame 28 and that the term "open state" as used herein may be understood as a state in which the window glass is partially present or not present within the window frame 28. To this end, the first rail 32a and the second rail 32b of the window guide 30 may include a mechanism configured to translate in an upward direction and a downward direction due to activation of the window regulator. It is contemplated the terms "upward," "upper," "downward," and "lower" as used herein may be understood with reference to the vehicle 100, such that the upward and upper direction and/or location are toward the roof 108 of the vehicle 100 and the downward and lower direction and/or location are toward the surface beneath the vehicle 100. Additionally, it is contemplated that the door-locking mechanism is configured to maintain the door 10 in a closed condition, and to allow a user to move the door 10 to an open condition. Accordingly, the door-locking mechanism may function in combination with a handle (not shown) arranged at an exterior of the vehicle 100, on the outer panel 60 of the door 10. It is contemplated that the term "closed condition" as used herein may be understood as a condition in which access to the passenger compartment of the vehicle 100 is blocked and that the term "open condition" as used herein may be understood as a condition in which access to the passenger compartment of the vehicle 100 is no longer blocked.

Referring to Figure 4, the component panel 20 is configured to reinforce the door 10. To this end, the component panel 20 includes one or more reinforcement beam 34, 36, 38 extending between the first end 12 and the second end 14 of the door 10. Particularly, the one or more reinforcement beam 34, 36, 38 overlaps the component panel 20 between the first end 12 and the second end 14 of the door 10. Additionally, the one or more reinforcement beam 34, 36, 38 is connected to the component panel 20 between the first end 12 and the second end 14 of the door 10. To this end, the one or more reinforcement beam 34, 36, 38 may be welded to the component panel 20, such that the component panel 20 and the one or more reinforcement beam 34, 36, 38 are formed in one piece. Additionally or alternatively, the one or more reinforcement beam 34, 36, 38 may be adhesive bonded to the component panel 20. Additionally or alternatively, the one or more reinforcement beam 34, 36, 38 may be coupled to the component panel 20. Accordingly, the opening 22 of the component panel 20 may be configured to receive the fastener to secure the one or more reinforcement beam 34, 36, 38 to the component panel 20. Additionally, the one or more reinforcement beam 34, 36, 38 may include a complimentary opening (not shown) configured to receive the fastener.

As shown in Figure 4, in the disclosed embodiment, the component panel 20 includes a first reinforcement beam 34, a second reinforcement beam 36, and a third reinforcement beam 38 configured to reinforce the door 10. In the disclosed embodiment, the first reinforcement beam 34 extends across and/or is connected to the component panel 20 along a belt line 110 of the vehicle 100 (see Figure 1). It is contemplated that the term "belt line" as used herein may be understood as a line extending along the side 102 of the vehicle 100, at a position that corresponds to a lowermost portion of the window frame 28. Additionally, the first reinforcement beam 34 may include the opening 22 configured to receive the fastener to secure the inner panel 40 and/or the outer panel 60 to the component panel 20. Additionally, in the disclosed embodiment, the first reinforcement beam 34 may be adhesive bonded and/or welded to the inner panel 40 and/or the outer panel 60. In the disclosed embodiment, the second reinforcement beam 36 extends across and/or is connected to the component panel 20 at a position below (i.e. downward of and/or lower than) the first reinforcement beam 34. Particularly, the second reinforcement beam 36 extends across and/or is connected to one or more of the first rail 32a and the second rail 32b of the window guide 30 of the component panel 20. Additionally, the second reinforcement beam 36 may include the opening 22 configured to receive the fastener to secure the inner panel 40 and/or the outer panel 60 to the component panel 20. Additionally, the second reinforcement beam 36 may be adhesive bonded and/or welded to the inner panel 40 and/or the outer panel 60. In the disclosed embodiment, the third reinforcement beam 38 extends across and/or is connected to the component panel 20 at a position below (i.e. downward of and/or lower than) the second reinforcement beam 36. Particularly, the third reinforcement beam 38 extends across and/or is connected to one or more of the first rail 32a and the second rail 32b of the window guide 30 of the component panel 20. Additionally, the third reinforcement beam 38 may include the opening 22 configured to receive the fastener to secure the inner panel 40 and/or the outer panel 60 to the component panel 20. Additionally, the third reinforcement beam 38 may be adhesive bonded and/or welded to the inner panel 40 and/or the outer panel 60. In this manner, the component panel 20 is configured to support the inner panel 40 and the outer panel 60 of the door 10.

In the disclosed embodiment, the component panel 20 is manufactured from an elastically deformable material capable absorbing energy and maintaining structural integrity of the door 10 during an impact to the door 10. It is contemplated that an impact may occur during a crash and/or collision event undergone by the door 10 and, thus, the vehicle 100, with another vehicle and/or object. To this end, in the disclosed embodiment, the component panel 20 is manufactured from one or more metal. Particularly, the component panel 20 is manufactured from aluminum. In manufacturing the component panel 20 from one or more metal, the component panel 20 is capable of functioning as a load introduction element, which introduces forces acting on the component panel 20 to the inner panel 40 during an impact to the door 10. Particularly, as the inner panel 40 is manufactured from one or more polymer (discussed further below), manufacturing the component panel 20 from one or more metal allows for reinforcement of areas of the door 10 that may not be sufficiently reinforced by the one or more polymer of the inner panel 40 alone, such as the window frame 28 and areas of the door 10 corresponding to the first reinforcement beam 34, second reinforcement beam 36, and the third reinforcement beam 38 of the component panel 20, in order to maintain impact integrity of the door 10. It is contemplated that the term "impact integrity" as used herein may be understood as a capability of the door 10 to withstand an impact to ensure safety of the occupant within the vehicle 100.

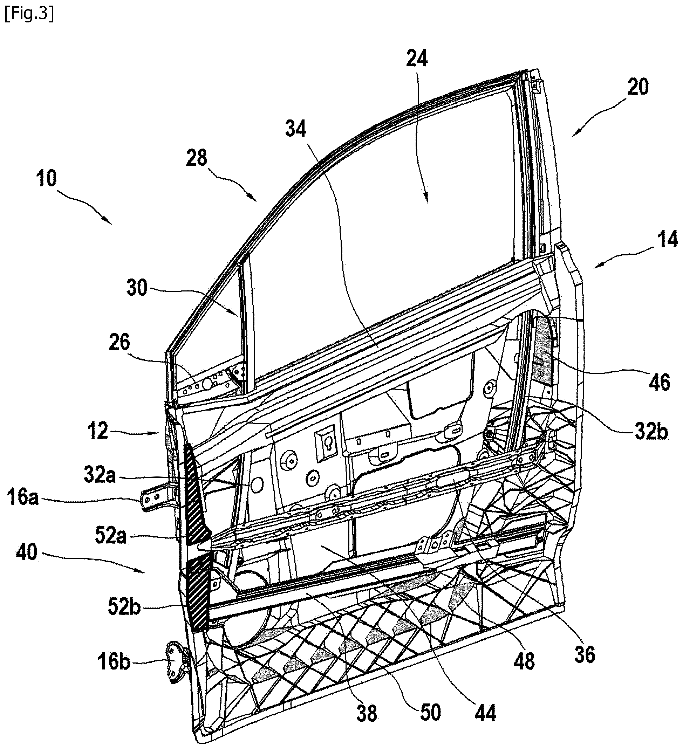

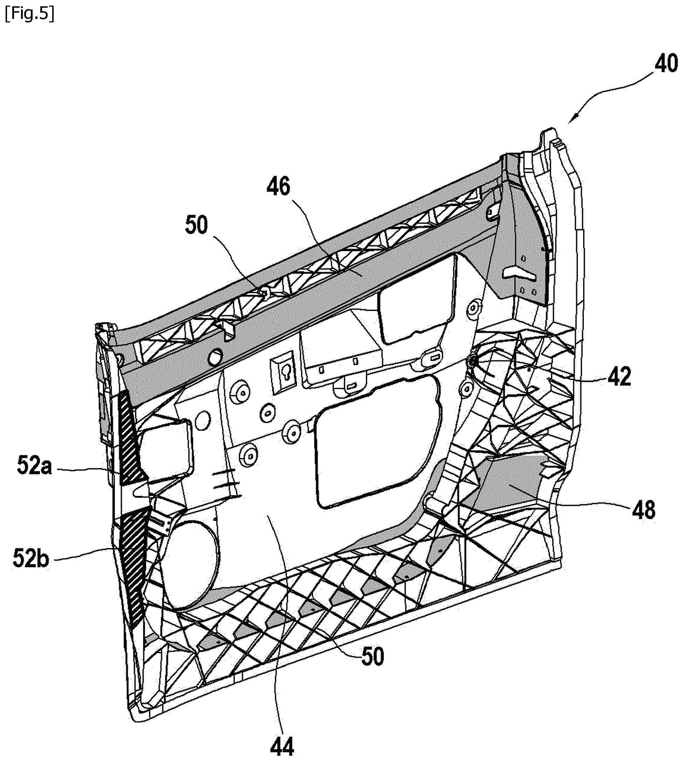

As illustrated by Figures 3 and 5, the inner panel 40 is secured to the component panel 20. Accordingly, the inner panel 40 includes one or more opening (second opening) 42, complimentary to the opening 22 of the component panel 20, configured to receive the fastener to secure the inner panel 40 to the component panel 20. Particularly, the inner panel 40 includes a plurality of the openings 42, complimentary to the openings 22 included by the first reinforcement beam 34, the second reinforcement beam 36, and/or the third reinforcement beam 38, configured to receive the fastener to secure the inner panel 40 to the component panel 20; however, the plurality of the openings 42 of the inner panel 40 will be referred to herein as "the opening 42," unless reference to the plurality of openings 42 of the inner panel 40 is otherwise necessary. Additionally, as discussed above, the inner panel 40 is adhesive bonded to the first reinforcement beam 34, the second reinforcement beam 36, and the third reinforcement beam 38 of the component panel 20.

Referring to Figures 3 and 5, the inner panel 40 includes a body 44 and one or more inner panel reinforced portion 46, 48. In the disclosed embodiment, the body 44 of the inner panel 40 extends between the first end 12 and the second end 14 of the door 10. Additionally, the body 44 and/or the one or more inner panel reinforced portion 46, 48 of the inner panel 40 includes the opening 42 that is complimentary to the opening 22 of the component panel 20 and configured to receive the fastener 20 to secure the inner panel 40 to the component panel 20.

In the disclosed embodiment, the inner panel 40 is manufactured from one or more rigid material suitable for reducing an overall weight and/or cost of manufacture of the vehicle 100. To this end, the inner panel 40 is manufactured from one or more polymer. Particularly, the body 44 of the inner panel 40 is manufactured from a polypropylene thermoplastic reinforced with long glass fiber (PP-LGF). More particularly, the body 44 of the inner panel 40 is manufactured from a PP-LGF reinforced with long glass fiber within a range of 20% to 60% by weight. In the disclosed embodiment, the body 44 of the inner panel 40 is manufactured from a PP-LGF reinforced with 40% long glass fiber by weight (PP-LGF40). It is contemplated that the term "long glass fiber" as used herein may be understood to include fibers having a length within a range of 1mm to 10mm. Utilizing PP-LGF40 to manufacture the body 44 of the inner panel 40 allows for the door 10 of the vehicle 100 to reduce an overall weight and cost of manufacture of the vehicle 100. Particularly, utilizing PP-LGF40 to manufacture the body 44 of the inner panel 40 allows for increased formability of the material used for the body 44 of the inner panel 40 and for the body 44 of the inner panel 40 to be fabricated by injection molding. Increased formability of the material used for the body 44 of the inner panel 40 and/or injection molding the body 44 of the inner panel 40 allows for fabrication of a wider range of complex geometries for the inner panel 40, such as fabrication of a variety of large inner panel 40 shapes and fabrication of specific local features and functional devices (e.g. strengthening ribs 50-discussed further below) of the inner panel 40.

As shown in Figures 3 and 5, the inner panel 40 is reinforced, such that safety of the vehicle 100 is not compromised by use of PP-LGF40 for the body 44 of the inner panel 40. To this end, the inner panel 40 includes the one or more reinforced portion 46, 48 configured to reinforce the body 44 of the inner panel 40. In the disclosed embodiment, the inner panel 40 includes a first reinforced portion 46 and a second reinforced portion 48 configured to reinforce the body 44 of the inner panel 40. The first reinforced portion 46 and second reinforced portion 48 of the inner panel 40 extend between the first end 12 and the second end 14 of the door 10. Particularly, the first reinforced portion 46 of the inner panel 40 extends along and/or is configured to reinforce the belt line 110 of the vehicle 100 and the second reinforced portion 48 of the inner panel 40 extends along and/or is configured to reinforce a rocker panel 112 of the vehicle 100. It is contemplated that the term "rocker panel" as used herein may be understood as a structural element of a frame (not shown) of the vehicle 100, which extends along the side 102 of the vehicle 100 between the front 104 of the vehicle 100 and the rear 106 of the vehicle 100 at a position at or adjacent to a lowermost portion of the frame of the vehicle 100. Additionally, it is contemplated that the term "frame" of the vehicle 100 as used herein may be understood as a main supporting structure of the vehicle 100, to which all other components are attached (e.g. a chassis). Additionally, as shown in Figure 5, the body 44 of the inner panel 40 includes strengthening ribs 50 formed at a position corresponding to the belt line 110 of the vehicle 100 and the rocker panel 112 of the vehicle 100, in order to further reinforce the belt line 110 and the rocker panel 112 of the vehicle. In the disclosed embodiment, the strengthening ribs 50 are included on the body 44 of the inner panel 40. Additionally, the strengthening ribs 50 are formed on the body 44 of the inner panel 40 during the injection molding fabrication process. Reinforcement of the belt line 110 of the vehicle 100 by the first reinforced portion 46 and reinforcement of the rocker panel 112 of the vehicle 100 by the second reinforced portion 48 increases transmission of forces during an impact to the belt line 110 and/or the rocker panel 112 of the vehicle 100, thereby reducing intrusion of the door 10 into the passenger compartment of the vehicle 100 during the impact to the door 10. Accordingly, including the first reinforced portion 46 at a position corresponding to the belt line 110 of the vehicle 100 and the second reinforced portion 48 at a position corresponding to the rocker panel 112 of the vehicle 100 increases impact integrity of the door 10.

In the disclosed embodiment, the first reinforced portion 46 and the second reinforced portion 48 of the inner panel 40 are manufactured from a polypropylene thermoplastic unidirectional tape reinforced with glass fiber (UD tape PP-GF). Particularly, the first reinforced portion 46 and the second reinforced portion 48 of the inner panel 40 are manufactured from a UD tape PP-GF reinforced with glass fiber within a range of 50% to 90% by weight. In the disclosed embodiment, the first reinforced portion 46 and the second reinforced portion 48 of the inner panel 40 are manufactured from a UD tape PP-GF reinforced with 70% glass fiber by weight (UD tape PP-GF70). Utilizing UD tape PP-LGF70 to manufacture the first reinforced portion 46 and the second reinforced portion 48 of the inner panel 40 further allows for reduction of an overall weight and cost of manufacture of the vehicle 100, as the use of UD tape PP-LGF70 to manufacture the first reinforced portion 46 and the second reinforced portion 48 improves the strength of the inner panel 40, thereby allowing for the use of PP-LGF40 to manufacture the body 44 of the inner panel 40 without compromising the impact integrity of the door 10. In the disclosed embodiment, the first reinforced portion 46 and the second reinforced portion 48 are integrated into the body 44 of the inner panel 40. Particularly, the body 44 of the inner panel 40 is overmolded onto the first reinforced portion 46 and the second reinforced portion 48 during the injection molding fabrication process.

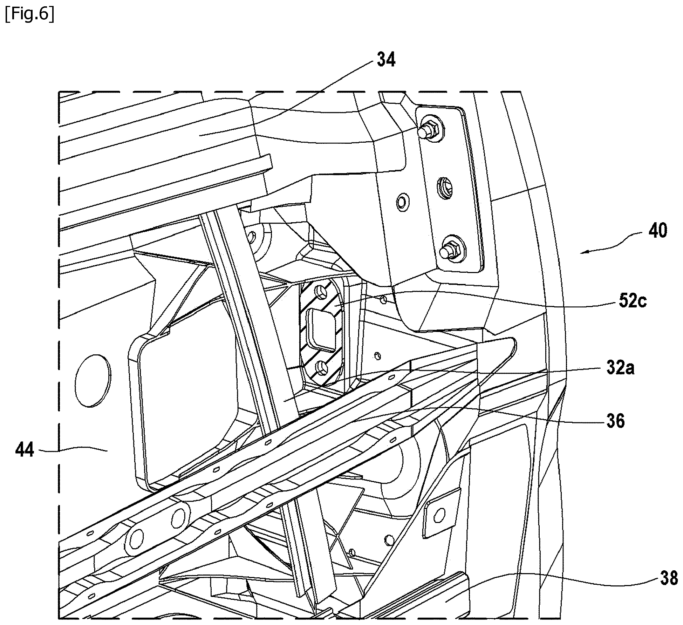

Additionally, referring to Figures 5-6, the inner panel 40 includes one or more reinforcement insert 52a, 52b, 52c configured to function as a load introduction element, which introduces forces acting upon the inner panel 40 during an impact to the door 10. In the disclosed embodiment, the inner panel 40 includes a first reinforcement insert 52a, a second reinforcement insert 52b, and a third reinforcement insert 52c. In the disclosed embodiment, the first reinforcement insert 52a and the second reinforcement insert 52b are included at positions corresponding to connection points between the door 10 and the frame of the vehicle 100, where highly concentrated loads occur during an impact to the door 10 of the vehicle 100 and, thus, where the mechanical properties of PP-LGF40 and UD tape PP-GF70 may be insufficient. Particularly, the first reinforcement insert 52a and the second reinforcement insert 52b are included at positions corresponding to hinge connection points between the door 10 and the frame of the vehicle 100. It is contemplated that the first reinforcement insert 52a and the second reinforcement insert 52b introduce forces from the hinge connection points to the inner panel 40, thereby increasing failure strain of the door 10 of the vehicle 100 at positions corresponding to hinge connection points of the door 10, in order to maintain attachment of the door 10 to the vehicle 100 during an impact to the door 10. It is contemplated that the term "hinge connection point" as used herein may be understood as a position on the door 10 where a hinge 16a, 16b included by the door 10 connects the door 10 to the frame of the vehicle 100. In the disclosed embodiment, the door 10 may include a first hinge 16a and a second hinge 16b. Additionally, in the disclosed embodiment, the first hinge 16a and the second hinge 16b are manufactured from a rigid material, such as steel. Further, it is contemplated that the term "failure strain" as used herein may be understood to be a maximum amount of deformation of a material and/or component causing structural failure of the material and/or component. Referring to Figure 6, the third reinforcement insert 52c is included as a door striker plate of the door 10. It is contemplated that the term "door striker plate" as used herein may be understood as a component configured to hook and/or latch the door 10 in the closed condition. Accordingly, the failure strain of the door 10 of the vehicle 100 at the door striker plate is increased such that the door 10 is maintained in the closed condition during an impact to the door 10.

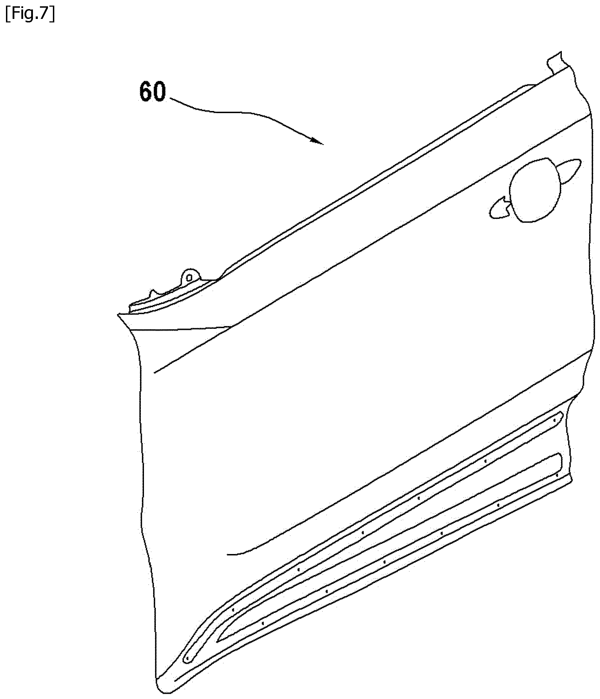

As shown in Figures 2 and 7, the outer panel 60 is configured to be secured to the component panel 20. Accordingly, the outer panel 60 may include one or more opening (not shown), complimentary to the opening 22 of the component panel 20, configured to receive the fastener to secure the outer panel 60 to the component panel 20. Particularly, the outer panel 60 may include a plurality of openings complimentary to the openings 22 included by the component panel 20 and configured to receive the fastener to secure the outer panel 60 to the component panel 20. Additionally, as discussed above, the outer panel 60 may be adhesive bonded to the component panel 20. Particularly, the outer panel 60 may be adhesive bonded to the first reinforcement beam 34, the second reinforcement beam 36, and the third reinforcement beam 38 of the component panel 20. Additionally or alternatively, it is contemplated that the outer panel 60 may also be welded to the component panel 20.

In the disclosed embodiment, the outer panel 60 is manufactured from an elastically deformable material capable absorbing energy and maintaining structural integrity of the door 10 during an impact to the door 10. To this end, the outer panel 60 may be manufactured from one or more metal. Particularly, the component panel 20 may be manufactured from aluminum. Additionally or alternatively, the outer panel 60 may be manufactured from one or more polymer, such as plastic.

In this manner, once the inner panel 40 and the outer panel 60 are secured to the component panel 20, the door 10 may be assembled onto the vehicle 100. Additionally, due to the door 10 including the component panel 20 manufactured from one or more metal and having the first reinforcement beam 34, the second reinforcement beam 36, and the third reinforcement beam 38; the inner panel 40 manufactured from one or more polymer and having the first reinforced portion 46, the second reinforced portion 48, the first reinforcement insert 52a, the second reinforcement insert 52b, and the third reinforcement insert 52c; and the outer panel 60 manufactured from one or more metal, the door 10 is capable of reducing an overall weight and cost of manufacture of the vehicle 100, without sacrificing the impact integrity of the door 10 and, thus, the safety of the vehicle 100.

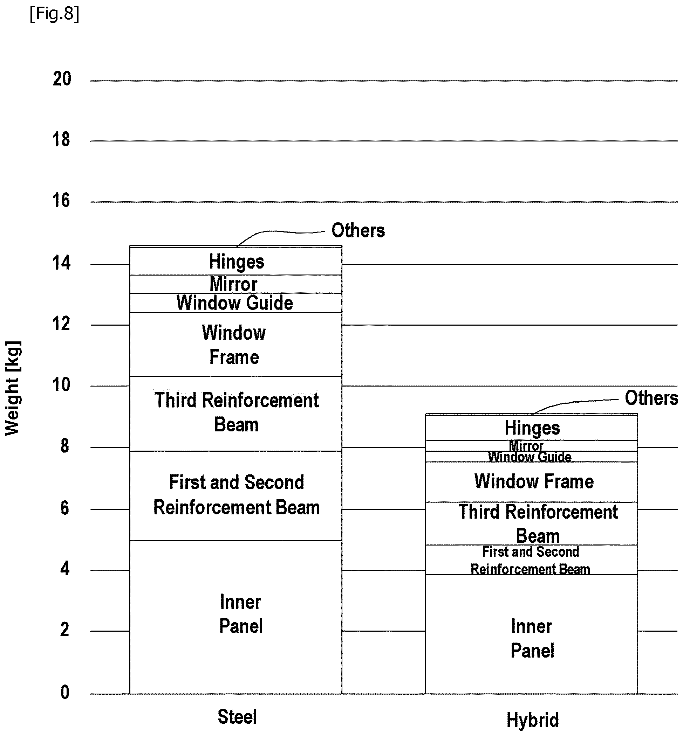

It has been shown that usage of the door 10 on the vehicle 100 reduces a weight of the vehicle 100. Particularly, referring to Figure 8, a comparison of a weight of aspects of the door 10 and a weight of aspects of a typical steel door is shown. As illustrated by Figure 8, the door 10 is capable of reducing a weight of the vehicle 100 by at least 5 kilograms, as compared to a weight of a same vehicle including a typical steel door.

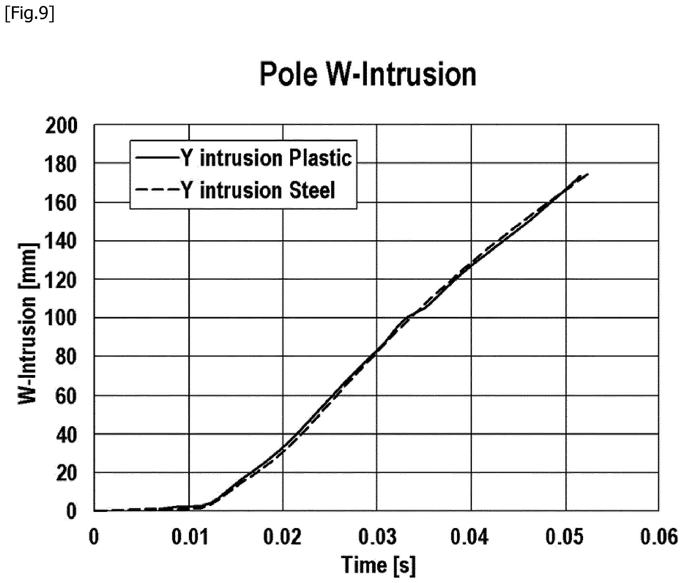

Additionally, performance of the door 10 on the vehicle 100 during an impact to the door 10 of the vehicle 100 is the same, or substantially similar, to that of a typical steel door included on a same vehicle. Particularly, referring to Figure 9, a Euro New Car Assessment Programme (NCAP) Side Pole test (also referred to herein as a "Pole W-Intrusion" test) of the door 10, as compared with a typical steel door, is shown. The Pole W-Intrusion test measures intrusion of a pole into the door 10 and/or the passenger compartment of the vehicle 100, with respect to time, during an impact to the door 10. As illustrated by Figure 9, intrusion of the pole into the door 10 is the same, or substantially similar, as intrusion of the pole into a typical steel door, in the same matter of time. For example, in a matter of 0.03 seconds, intrusion of the pole for both of the door 10 and the typical steel door is 80 millimeters. Accordingly, it is shown that the door 10 is capable of reducing a weight of the vehicle 100, without compromising the impact integrity of the door 10 and, thus, the safety of the vehicle.

Although the present disclosure herein has been described with reference to particular embodiments, it is to be understood that these embodiments are merely illustrative of the principles and applications of the present disclosure.

It is intended that the specification and examples be considered as exemplary only, with a true scope of the disclosure being indicated by the following claims.

Additionally, all of the disclosed features of an apparatus may be transposed, alone or in combination, to a method and vice versa.

## Claims

1. A door (10) for a vehicle (100), the door comprising:
a component panel (20) extending between a first end (12) and a second end (14) of the door (10);
one or more reinforcement beam (34, 36, 38) overlapping the component panel (20) between the first end (12) and the second end (14) of the door (10); and
an inner panel (40) coupled to the component panel (20), the inner panel including a body (44) overlapping the component panel between the first end (12) and the second end (14) of the door (10) and one or more inner panel reinforced portion (46, 48) overlapping the component panel between the first end and the second end of the door;
wherein, the component panel (20) and the one or more reinforcement beam (34, 36, 38) are comprised of one or more metal and the inner panel (40) is comprised of one or more polymer.

2. The door (10) according to claim 1, wherein the body (44) of the inner panel (40) is comprised of a polypropylene thermoplastic reinforced with long glass fiber within a range of 20% to 60% by weight.

3. The door (10) according to any of claims 1-2, wherein the one or more inner panel reinforced portion (46, 48) is comprised of a polypropylene thermoplastic unidirectional tape reinforced with glass fiber within a range of 50% to 90% by weight.

4. The door (10) according to any of claims 1-3, comprising an outer panel (60) coupled to the component panel (20), wherein the outer panel is arranged at a distance from a passenger compartment of the vehicle (100) that is further than a distance of the inner panel (40) from the passenger compartment of the vehicle.

5. The door (10) according to claim 4, wherein the outer panel (60) is comprised of one or more metal.

6. The door (10) according to any of claims 1-5, wherein the one or more reinforcement beam (34, 36, 38) is connected to the component panel (20).

7. The door (10) according to any of claims 1-6, wherein the one or more reinforcement beam (34, 36, 38) includes a first reinforcement beam (34) and a second reinforcement beam (36) and the second reinforcement beam is positioned below the first reinforcement beam.

8. The door (10) according to claim 7, wherein the first reinforcement beam (34) is configured to reinforce a belt line (110) of the vehicle (100).

9. The door (10) according to any of claims 7-8, wherein the one or more reinforcement beam (34, 36, 38) includes a third reinforcement beam (38) and the third reinforcement beam is positioned below the first reinforcement beam (34) and the second reinforcement beam (36).

10. The door (10) according to any of claims 1-9, wherein the one or more inner panel reinforced portion (46, 48) of the inner panel (40) includes a first inner panel reinforced portion (46) configured to reinforce a belt line (110) of the vehicle (100).

11. The door (10) according to any of claims 1-10, wherein the one or more inner panel reinforced portion (46, 48) of the inner panel (40) includes a second inner panel reinforced portion (48) configured to reinforce a rocker panel (112) of the vehicle (100).

12. The door (10) according to any of claims 1-11, wherein the inner panel (40) includes one or more reinforcement insert (52a, 52b, 52c) configured to reinforce a connection point between the door (10) and the vehicle (100).

13. The door (10) according to any of claims 1-12, wherein the component panel (20) includes a window frame (28) extending between the first end (12) and the second end (14) of the door (10) and a window guide (30) extending between the first end and the second end of the door.

14. The door (10) according to claim 13 taken in combination with claim 9, wherein one or more of the second reinforcement beam (36) and the third reinforcement beam (38) are connected to the window guide (30).

15. A method for reducing an overall weight of a vehicle (100), the method comprising:
providing the door (10) according to any of claims 1-14; and
assembling the door (10) to the vehicle (100).
